# EUROPEAN PATENT APPLICATION

(11) **EP 2 806 348 A1**
(43) Date of publication of application: **26.11.2014**
(21) Application number: 13168755.0
(22) Date of filing: 22.05.2013
(51) Int. Cl.: G06F 3/0489, H04N 5/445, H04N 21/422, H04N 21/482

(54) **System and method for navigating in a graphical user interface, using navigation buttons**

(71) Applicant: TP Vision Holding B.V., 1097 JB Amsterdam (NL)
(72) Inventor: Visser, Michiel, 1097 JB Amsterdam (NL)
(74) Representative: Busch, Patrick

(57) **Abstract**

A system comprising means for displaying a graphical user interface containing a plurality of selectable elements (15) on a screen (12), and which means are arranged to distinguish said elements by means of a distinguishing feature (16), and a plurality of user operable input elements (14), where the system is arranged for moving the distinguishing feature (16) from a first selectable element (15) to a second selectable element (15) in response to an activation of a user operable input element (14) in a direction dependent on which one of user operable input elements (14) is activated, characterized in that the selection of the second selectable element (15) from among a plurality of available selectable elements (15) is also dependent on a characteristic of activation of the activated input element (14).

## Description

### FIEL OF THE INVENTION

The present invention relates to systems capable of displaying a graphical user interface which users can navigate using buttons. The invention further relates to a method of navigation.

### BACKGROUND OF THE INVENTION

Many electronic consumer devices, such as flat televisions or set-top boxes, are capable of showing webpages on a display and allow the user to navigate these webpages using buttons on a remote control, and to select hyperlinks to move to other webpages. Similarly, such devices may show menu structures in a graphical user interface, allowing the use to navigate these menu structures and select menu elements in order to invoke some action of the device, change a setting, or achieve some other desired result.

Webpages are easily navigated with a pointer device such as a computer mouse or a touch device, with which the user can readily indicate the hyperlink or menu element he desires to activate. In many devices, however, the means of control to navigate the user interface of webpage are limited to navigation buttons such as the well-known up/down/left/right buttons on a remote control. In this situation selecting the hyperlink or menu element of choice is not so straightforward. A common approach is to show a highlight on the display that highlights one of the hyperlinks or menu elements. This highlight then jumps to other hyperlinks or menu elements shown on the display in response to the navigation buttons. For example, when the user presses the *'down'* button. The highlight will move to a next hyperlink or menu element positioned lower on the screen.

This can lead to unexpected results when the hyperlinks or menu element are of different shapes and sizes. For example, when a large element is positioned above three smaller elements, which one of the three is reached after pressing the '*down'* button? The common approach is that the destination element with its centre most directly below the centre of the first element is selected. This is described in EP1111497 A1.

This solution, however, can lead to a selection different from what the user intended. For example, it is possible to start from the top left corner of the display and end up in the lower right corner, by pressing only the *'down'* button - while the user may logically have expected to end up in the lower left corner by doing so.

### SUMMARY OF THE INVENTION

It is an object of the invention to provide a solution to the above problem that is more convenient for the user.

This is achieved, according to a first aspect of the invention, by a system comprising means for displaying a graphical user interface containing a plurality of selectable elements on a screen, and which means are arranged to distinguish said elements by means of a distinguishing feature, and a plurality of user operable input elements, where the system is arranged for moving the distinguishing feature from a first selectable element to a second selectable element in response to an activation of a user operable input element in a direction dependent on which one of user operable input elements is activated, **characterized in that** the selection of the second selectable element from among a plurality of available selectable elements is also dependent on a characteristic of activation of the activated input element.

According to a second aspect of the invention the object of the invention is achieved by a method of navigating in a graphical user interface displayed on a screen, containing a plurality of selectable elements which can be distinguished by means of a distinguishing feature, with input from a plurality of user operable input elements, in which the distinguishing feature is moved from a first selectable element to a second selectable element in response to an activation of a user operable input element in a direction dependent on which one of the plurality of user operable input elements is activated, **characterized in that** the selection of the second selectable element from among a plurality of available selectable elements is also dependent on a characteristic of activation of the activated input element.. The above system and method have the advantage that the user has the possibility to influence the navigation through the graphical user interface simply by the way in which he presses a button, and to force the navigation behaviour when he desires. An additional advantage is that no additional buttons are required.

An embodiment of a system according to the invention is arranged such that after moving the distinguishing feature from the first selectable element to the second selectable element, in a subsequent move of the distinguishing feature to a subsequent selectable element in response to activation of the same user operable input element, the selection of the subsequent selectable element from among available selectable elements depends on the characteristic of activation. This embodiment allows the user to influence the navigation over multiple elements by means of input elements that are already available.

A further embodiment system according to the invention is **characterized in that** the characteristic of activation is a duration of the activation, a speed of repetition of two or more consecutive activations, or a force of the activation. This has the advantage that the user can easily influence the navigation by means of available input elements in a way that is easy to perform and to understand.

A further embodiment of the system according the invention is **characterized in that** the system is arranged such, that after the distinguishing feature has been moved from a first selectable element to a second selectable element, the subsequent move to a subsequent selectable element is dependent on a geometry of the first selectable element. This has the advantage that subsequent steps of navigation are made dependent on the origin of the first step, and the destination ultimately reached is thereby linked to the origin where the navigation steps started.

An embodiment of the system according to the invention is characterized in the system is arranged to represent the geometry dependence on the first element graphically on the screen. This ensures that the user receives visual feedback on the details of the navigation, and this helps the user to understand the logic of it.

### BRIEF DESCRIPTION OF THE DRAWINGS

Further embodiments of the system according to the invention and the advantages thereof will be apparent from and elucidated further with reference to the accompanying drawings, in which
Fig. 1 shows a television with a remote control, displaying a graphical user interface with various elements that can be highlighted;
Fig. 2 shows a television with a remote control, displaying a graphical user interface with many elements that can be highlighted;
Fig. 3 shows a layout of graphical user interface elements with distance indications from a centre point;
Fig. 4 shows a layout of graphical user interface elements with distance indications from a reference point;
Fig. 5 shows a layout of graphical user interface elements with displacement indications between the box shaped elements;
Fig. 6 shows a layout of graphical user interface elements with displacement indications between the box shaped elements and a reference box;
Fig. 7 shows a layout of graphical user interface elements with a
   visualized reference point;
Fig. 8 shows a layout of graphical user interface elements with a
   visualized reference box;
Fig. 9 shows a system diagram;
Fig. 10 shows a flowchart.

### DETAILED DESCRIPTION OF EMBODIMENTS

The following description focusses mainly on embodiments of the invention applied in a flat television by way of example. However, it must be appreciated that the invention is not limited to televisions only, but may be applied in other consumer and non-consumer devices that incorporate a display or are connected to a display during operation such as, for example, computer monitors, DVD players, Blu-ray Disk players or Home Theatre Systems.

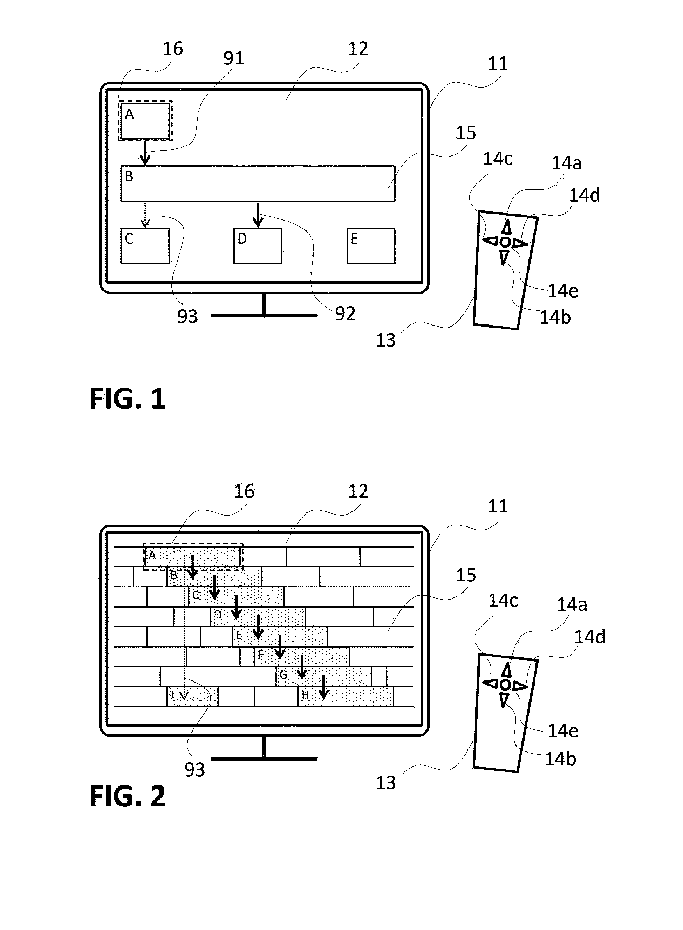

Figure 1 illustrates an example embodiment of the invention for a television 11 incorporating a display 12. The television 11 is controlled by means of a remote control 13, which contains a group of navigation buttons 14. In this embodiment the navigation buttons are of a usual type comprising so-called *'up', 'down', 'left'* and *'right'* buttons 14a, 14b, 14c and 14d for moving a highlight or other distinguishing characteristic over the screen in a direction dependent on the activated button. The group of navigation buttons also comprises an '*ok*' button 14e, used for confirmation or activation of menu elements. Other options than such buttons are possible. For example, a small joystick may be applied to achieve the same effect. In general terms there will be user operable input elements, which the user can activate to achieve desired actions or results from the system.

On the display 12 a graphical user interface is shown. This user interface contains several elements 15. These elements may be hyperlinks or virtual action buttons, but generally elements that can be selected to achieve some effect. Which element is currently selected is indicated by a highlight or distinguishing feature 16. Here, the distinguishing feature is represented as a dashed line surrounding the element, but the distinguishing effect may be achieved in many ways, such as highlighting by means of a change in colour of the selected element, a change in brightness of the element, a change in background colour immediately surrounding the selected element, etcetera. To move the distinguishing feature, from one element to another, the user presses the navigation buttons.

In the situation of Figure 1 a first element labelled A is distinguished. When the user now presses the *'down'* button 14b, the distinguishing feature will move in the downward direction as indicated by a solid arrow 91, and element B will be highlighted. When the user presses the '*down'* button once more, the problem described earlier in the introductory part of the description becomes apparent. There are in this example three elements (C, D and E) that are positioned in a downward direction with respect to element B, and each of the three is a plausible candidate for being distinguished next. Which element will in fact be selected next depends on an algorithm that the system uses to determine jumps of the distinguishing feature from one element to the next. An approach commonly known in the prior art is to select the element that is positioned closest to the centre of the currently selected element. Other prior art methods exist, and they commonly take into account only the geometry of the user interface elements, their sizes and their relative positions. In the embodiment of Figure 1, the distinguishing feature is moved according to an algorithm which determines which of the elements located in the direction indicated by the navigation button is closest to the centre of element B. In this example the element that is closest to the centre of element B in "down" direction is element D. So the distinguishing feature moves to element D, again indicated by a solid arrow 92 in Figure 1. So after pressing the *'down'* button 14b twice, the user has navigated from element A to element D. However, given the configuration presented in Figure 1, it might be expected that pressing *'down'* twice when departing from element A would result in the highlighting of element C, which is positioned straight below element A. The expected second step would then have moved the highlight from element B to element C, as indicated by the dashed arrow 93 in Figure 1.

A similar situation exists where a user starts out with the distinguishing feature on element E in Figure 1, presses 'up' and then *'down',* and ends up with the distinguishing feature on element D rather than to be back on element E as the user might have expected.

Another example is shown in Figure 2. The graphical user interface now contains many densely packed elements 15; it may for example form an electronic program guide where the elements represent television programs, the horizontal dimension represents a time axis and the rows in the vertical dimension represent a series of television channels. In the example as shown, when the element labelled A is highlighted and the user presses the *'down'* button repeatedly, the highlight will move in succession through elements A, B C, D, E, F, G and finally ends up in element H, assuming the same algorithm as described above is used. It is likely that the user would have wanted to navigate from element A to element J, more or less down in a straight line as indicated by a dashed arrow 93, highlighting all programs scheduled around the same time as the program represented by element A, whereas element H represents a program scheduled much later.

The above examples illustrate how the prior art algorithm for moving a distinguishing feature between menu elements in a graphical user interface, while perfectly natural in many cases, may lead to unexpected behaviour in other cases, depending on the layout of the menu elements. The inventor has realized that this can be overcome by giving access to an alternative algorithm for determining the motion of the distinguishing feature, in addition to the default behaviour. This preferably involves the following three factors:
- The user should preferably have simple and intuitive means to choose the alternative behaviour;
- The alternative behaviour may be enabled by the system having some memory of where the distinguishing feature has come from in order to determine where navigation in a straight line would lead;
- The system should preferably provide visual feedback to the user to help him understand how the distinguishing feature will jump, and to avoid confusion.

These measures will each be discussed in more detail.

The inventor has realized that the most simple way to enable a choice between two navigation behaviours is to let the behaviour, i.e. the distinguishing feature jumping algorithm to be used, depend on the way the user presses a navigation button, in other words on a characteristic of the activation of an input element. The advantage is that no additional buttons are required, which would add cost, and which would also make the control overly complex. A first distinction that can be made is the speed with which a button is repeatedly pressed. In the example of Figure 2, when the user leisurely presses the *'down'* button repeatedly, the distinguishing feature jumps stepwise from element A to element H, as described above. When however the user presses the same button in a quick repetition, the system may recognize this by comparing the time interval between consecutive button presses with some predetermined threshold, which may be for example half a second, and then apply the alternative distinguishing feature jumping algorithm, causing the distinguishing feature to jump stepwise to element J instead. If however in any of the consecutive button presses the threshold interval is exceeded, the default jumping algorithm will be applied.

Similarly, the system may recognize when the user keeps the navigation button pressed during an interval exceeding a predetermined length instead of releasing it, again comparing the length of the interval with a predetermined threshold, which may be for example half a second, to distinguish between a short and a long press. When a long press is detected, the system may apply the alternative distinguishing feature jumping algorithm. In this case it is logical to revert to the default jumping algorithm when the user releases the button.

Yet another solution is to detect the force with which the user presses the button. While this is not commonly possible in regular remote control buttons, it is more suitable in joysticks and similar solutions. In this case the system can detect when the user presses the joystick in the desired direction with more force, again compared to some predetermined threshold, and will then apply the alternative distinguishing feature jumping algorithm.

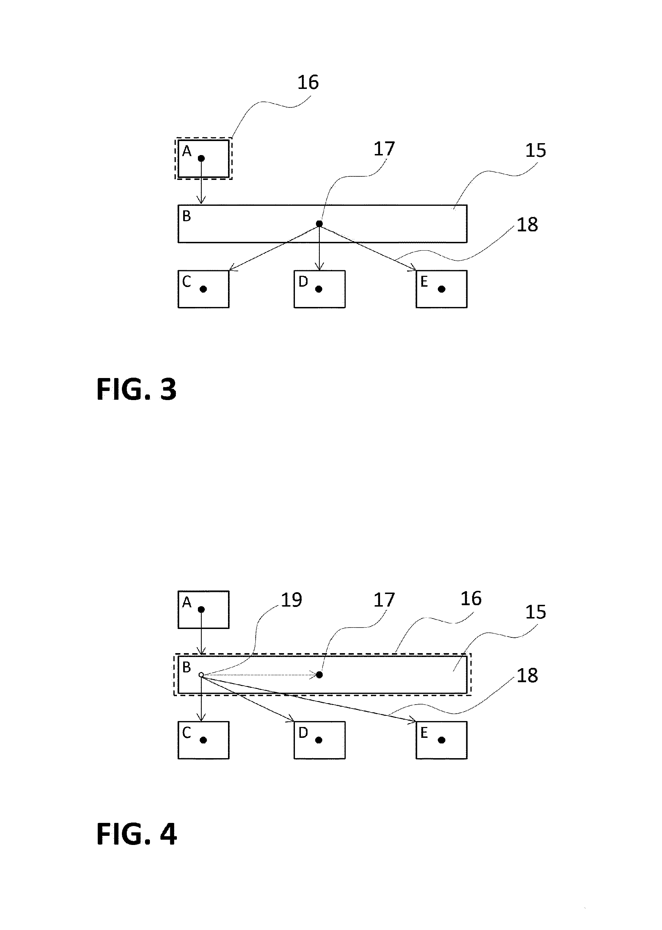

A well-known algorithm for determining how the distinguishing feature jumps is illustrated in Figure 3, showing the same layout of graphical user interface elements as used in Figure 1. Here, for each element 15 its centre point 17 is indicated by a solid dot. When the distinguishing feature 16 has to move in a direction given by user input, the algorithm determines the element to jump to, based on the distance from the centre point of the current element to the closest part of any candidate element, indicated by distance arrows 18, and selects the element with the shortest distance. For example, when starting at element A and moving down, the shortest distance is obviously to element B, and the distinguishing feature will jump to element B. When subsequently moving down again, the algorithm will determine the closest distance to any element in a downward direction and select element D. To realize that element C may be the appropriate choice when the distinguishing feature has just come from element A, the algorithm needs to store geometrical properties of that origin in memory.

The inventor has realized that a memory of the origin of the distinguishing feature may well be introduced by a reference point 19, as illustrated in Figure 4. When in a first move the distinguishing feature has jumped down from element A to element B, a reference point is created, positioned in element B directly below the centre point of element A. For a subsequent move down, the algorithm includes a calculation of distances from this reference point rather than from the actual centre point of element B, and selects element C as the closest next element to jump to. Thus the desired alternative behaviour has been introduced.

As described above, this alternative behaviour may be applied when the user presses the *'down'* button long, or twice in quick repetition. The terms long an quick imply that the algorithm needs to take time into account. A solution is to let the choice between the two behaviours depend on the time elapsed between two consecutive button presses, or on the duration of a longer button press. When button is pressed longer than a certain predetermined threshold duration, the algorithm may switch to alternative behaviour and start using the reference point for its decisions. Similarly, when a second button press is detected within a certain predetermined time interval from a first button press, the algorithm switches to alternative behaviour and starts using the reference point. Another approach is to model the reference point as gradually moving towards the actual centre point model in predetermined time interval from being created, and when a button is pressed within that period, the relevant distances are measured with respect to the then-current position of the reference point.

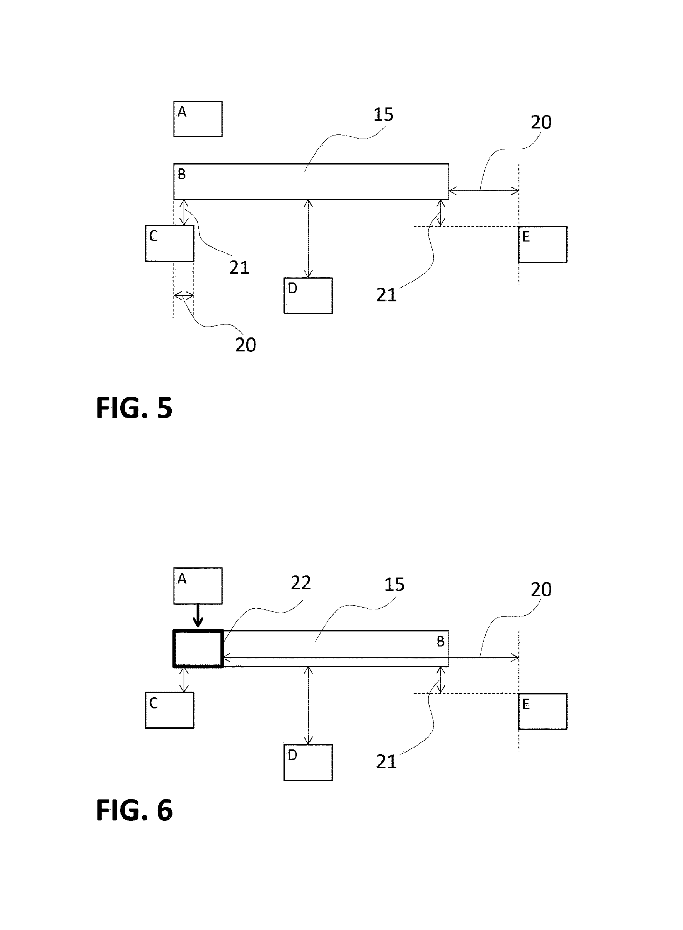

More elaborate algorithms for determining distinguishing feature jumps take into account more aspects of the geometry of the user interface elements. In one approach, illustrated in Figure 5, all elements 15 are considered as rectangular boxes, and the displacements between adjacent elements are measured to determine the next element to be selected. These displacements are indicated by double-headed arrows, 21 for the primary displacements in the direction of motion, and 20 for the secondary displacements in the transverse direction. In the layout of Figure 5, assume that element B is selected and the user has pressed the *'down'* button 14b. The motion of the distinguishing characteristic will be downward, so the primary displacements 21 are vertical displacements and the secondary displacements 20 are horizontal displacements. The algorithmic steps to determine the next jump will then be:
- Select only elements which are in the intended direction; in this case that means element A is rejected because it is positioned in the up direction from element B.
- Determine the displacements between the candidate elements and the origin element B; this includes both primary displacements 21 in the direction of motion, in this case vertical, and secondary displacements 20 in the transverse direction, in this case horizontal. Note that element E has no overlap with element B, there is a gap between these elements both in horizontal and vertical direction. This is a positive displacement value. Element C however has an overlap with element B in the horizontal direction, in this case the horizontal or secondary displacement has a negative value.
- Select only those elements for which the primary displacement exceeds the secondary displacement; this removes candidate element E, which is really more to the right of element B than below it.
- For the remaining elements, calculate a weighted average of their primary and secondary displacements and select the candidate with the smallest weighted displacement.

The weighting in the final step serves to give some preference to elements directly below rather than to the side of the origin element. In the layout of Figure 5, the weight factor will make sure element D is selected when moving down from B, even though element C has the smaller vertical or primary displacement. On the other hand, if element D was positioned much further down, element C would be selected instead. The weight factor is determined experimentally, and its value is tweaked to give the most acceptable behaviour in practice.

In order to introduce a memory of the origin of the distinguishing feature into this algorithm, a reference box is introduced, similar to the reference point discussed above. This is illustrated in Figure 6, where the reference box 22 is drawn. It assumes the vertical dimensions of element B, but the horizontal dimensions of the element of origin, element A. In general terms, the box dimensions orthogonal to the primary direction of motion are retained, both in size and position. Now when the alternative jumping behaviour is required, which is achieved for example by a quick second press of the *'down'* button as explained above, the algorithm for determining the second jump will make a decision based on the size and position of the reference box instead of those of element B. In the layout of Figure 6, this means element C is selected rather than element D - which is precisely the intention.

The algorithms described above serve as examples, many more algorithms could be devised both for standard and for alternative behaviour.

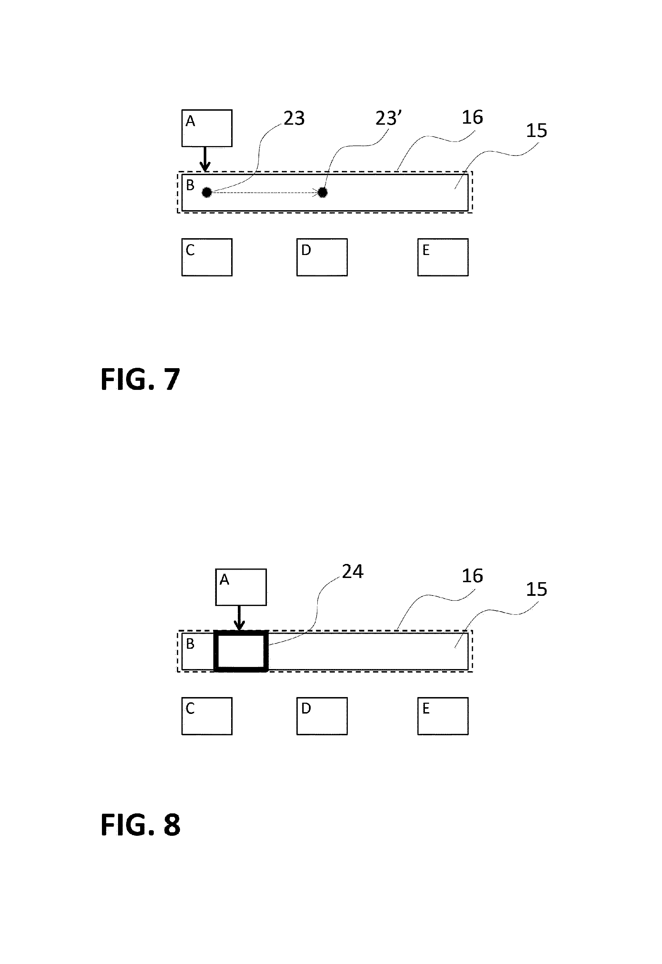

To avoid confusion, it is important that the user can distinguish between the default and the alternative distinguishing feature jumping behaviours that are applied and can understand what is happening. This is best achieved by providing visual feedback to the user in the graphical user interface. In the case of the algorithm with the reference point explained above illustrated in Figure 4, visualization can be achieved by actually indicating the position of the reference point on the screen. This is illustrated in Figure 7. After a move from element A to element B, the distinguishing feature 16 will be shown on element B. In addition, a reference point visualization 23 may be shown, to indicate to the user that if the button is pressed again, or is kept pressed, further navigation will start from this point. As the threshold time interval for alternative jumping behaviour elapses, the reference point may move to the actual centre point position 23'. It may subsequently be removed from the screen to indicate that jumping behaviour is back to default. The reference point may be shown in many ways, it may be a dot, a circled or any other shape. It may be opaque or partially transparent.

In case of the algorithm with the reference box described above, visualization can be achieved by actually displaying a box on the screen at the position of the reference box. This is illustrated in Figure 8. After a move from element A to element B, the distinguishing feature 16 will be shown on element B. In addition, a reference box visualization 24 may be shown to indicate that if the button is pressed again, or is kept pressed, further navigation will start from this box. As the threshold time interval for alternative jumping behaviour elapses, the reference box visualization may grow gradually, or stepwise, to the size and position of element B, to indicate that jumping behaviour is back to default. It may subsequently be removed from the screen.

It must be noted that it is also possible to use the reference point visualization, or the reference box visualization as a distinguishing feature. In that case it need not be removed when the threshold time interval expires, but it simply moves to its default position. This works especially well with the reference box visualization, which will then show on the screen as a size-changing box that adapts to the geometry of the elements with a small delay as it moves around, thus serving both the purpose of highlighting the selectable elements and visualizing the memory effect in the distinguishing characteristic jumping behaviour.

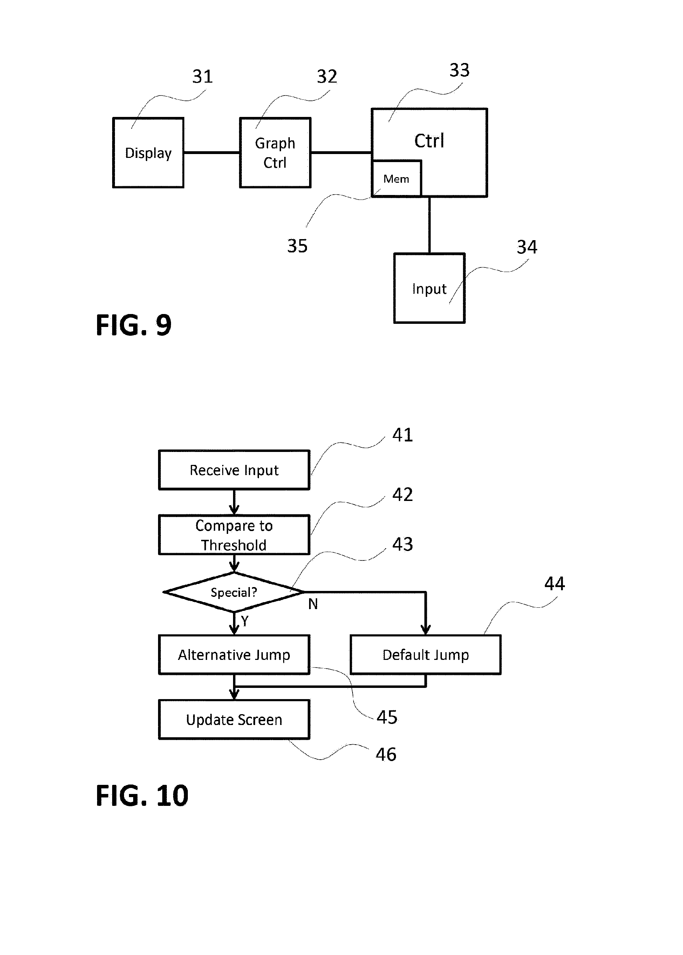

Figure 9 shows a system diagram of an embodiment of a system according to the invention as described above. The system contains a general purpose controller 33, controlled by a program in accordance with an algorithm. The program is stored in a memory 35. This controller, amongst other tasks, receives user input from an input device 34. The graphical user interface is generated by a graphics controller 32, and displayed on a display 31. This is a straightforward basic configuration, but other configurations are possible.

Figure 10 shows a flowchart of the main steps of the program stored in the memory 35 in the method of navigation. First, in step 41, input from the user is received. In step 42 this input is compared to relevant thresholds to determine if the input was special and alternative distinguishing feature jumping behaviour must be applied. This decision is made in step 43, and then either default or alternative distinguishing feature jumping behaviour is applied in, respectively, step 44 or 45. Finally in step 46 the screen is updated to reflect the results.

It must be noted that while all examples discussed here involve downward movement of a distinguishing feature, the same principles apply equally in other directions, and the application to any other direction is straight-forward.

Although several embodiments of the present invention have been illustrated in the accompanying drawings and described in the foregoing detailed description, it will be understood that the invention is not limited to the embodiments disclosed, but is capable of numerous modifications without departing from the scope of the invention as set out in the following claims.

## Claims

1. A system comprising
- means for displaying a graphical user interface containing a plurality of selectable elements (15) on a screen (12), and which means are arranged to distinguish said elements by means of a distinguishing feature (16), and
- a plurality of user operable input elements (14),
where the system is arranged for moving the distinguishing feature (16) from a first selectable element (15) to a second selectable element (15) in response to an activation of a user operable input element (14) in a direction dependent on which one of the plurality of user operable input elements (14) is activated, **characterized in that** the selection of the second selectable element (15) from among a plurality of available selectable elements (15) is also dependent on a characteristic of activation of the activated input element (14).

2. A system as described in claim 1 where the system is arranged such that after moving the distinguishing feature (16) from the first selectable element (15) to the second selectable element (15), in a subsequent move of the distinguishing feature (16) to a subsequent selectable element (15) in response to activation of the same user operable input element (14) the selection of the subsequent selectable element (15) from among a plurality of available selectable elements (15) depends on the characteristic of activation.

3. A system according to claim 1 or 2 where the characteristic of activation is a duration of the activation.

4. A system according to claim 1 or 2 where the characteristic of activation is a speed of repetition of two or more consecutive activations.

5. A system according to claim 1 or 2 where the characteristic of activation is a force of the activation.

6. A system according to any of the previous claims where the system is arranged such, that after the distinguishing feature (16) has been moved from a first selectable element (15) to a second selectable element (15), the subsequent move to subsequent selectable element (15) is dependent on a geometry of the first selectable element (15).

7. A system according to claim 6 where the system is arranged to represent the geometry dependence on the first element graphically on the screen (12).

8. A system according to claim 7, where the system is arranged to represent the geometry dependence by essentially a dot shaped graphical element (23).

9. A system according to claim 7, where the system is arranged to represent the geometry dependence by essentially a box shaped graphical element (24).

10. A system according to claim 6 where a geometrical property of the first selectable element (15) is stored in a memory (35).

11. A method of navigating in a graphical user interface displayed on a screen (12), containing a plurality of selectable elements (15) which can be distinguished by means of a distinguishing feature (16), with input from a plurality of user operable input elements (14), in which the distinguishing feature (16) is moved from a first selectable element (15) to a second selectable element (15) in response to an activation of a user operable input element (14) in a direction dependent on which one of the plurality of user operable input elements (14) is activated, **characterized in that** the selection of the second selectable element (15) from among a plurality of available selectable elements (15) is also dependent on a characteristic of activation of the activated input element (14).

12. A method as described in claim 11 where after moving the distinguishing feature (16) from the first selectable element (15) to the second selectable element (15), in a subsequent move of the distinguishing feature (16) to a subsequent selectable element (15) in response to activation of the same user operable input element (14) the selection of the subsequent selectable element from among a plurality of available selectable elements depends on the characteristic of activation.
